(19) Europäisches Patentamt
European Patent Office
Office européen des brevets

(11) Veröffentlichungsnummer : **0 451 313 B1**

(12) **EUROPÄISCHE PATENTSCHRIFT**

(45) Veröffentlichungstag der Patentschrift :
**13.01.93 Patentblatt 93/02**

(51) Int. Cl.$^5$ : **F02M 25/08**

(21) Anmeldenummer : **90107017.7**

(22) Anmeldetag : **12.04.90**

# (54) Tankentlüftungssystem.

(43) Veröffentlichungstag der Anmeldung :
**16.10.91 Patentblatt 91/42**

(45) Bekanntmachung des Hinweises auf die Patenterteilung :
**13.01.93 Patentblatt 93/02**

(84) Benannte Vertragsstaaten :
**DE FR GB IT**

(56) Entgegenhaltungen :
**WO-A-90/00225**

(56) Entgegenhaltungen :
**DE-A- 3 624 441**
**FR-A- 2 607 192**
**PATENT ABSTRACTS OF JAPAN, Band 10, Nr. 196 (M-497), 10. Juli 1986;& JP-A-61 40 437 (TOYOTA) 26-02-1986**

(73) Patentinhaber : **SIEMENS AKTIENGESELLSCHAFT**
**Wittelsbacherplatz 2**
**W-8000 München 2 (DE)**

(72) Erfinder : **Frinzel, Udo, Dipl.-Ing.**
**Ölbergstrasse 12**
**W-8411 Grünthal (DE)**

EP 0 451 313 B1

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue Saint-Denis, 75001 PARIS

## Beschreibung

Die Erfindung betrifft ein Tankentlüftungssystem gemäß Oberbegriff von Anspruch 1, sowie ein Verfahren zum Betrieb dieses Tanken Hüftungssystem.

Bei solchen Systemen dient als Speicher ein Aktivkohlefilter, der die im Tank anfallenden Kraftstoffdämpfe aufnimmt. Dieser Aktivkohlefilter ist mit einer Spülleitung mit dem Ansaugtrakt der Brennkraftmaschine stromabwärts der Drosselklappe verbunden. Der Aktivkohlefilter ist einseitig zur Atmosphäre hin offen, so daß, wenn ein in der Spülleitung befindliches Tankentlüftungsventil geöffnet wird, durch den im Ansaugtrakt herrschenden Unterdruck Atmosphärenluft durch den Aktivkohlefilter gezogen wird und dadurch die Kraftstoffdämpfe ausgespült werden. Die Öffnung des Tankentlüfungsventils wird von einem Steuergerät bestimmt, das die Spülung des Aktivkohlefilters nur bei bestimmten Betriebszuständen der Brennkraftmaschine durchführt. Ein solches System ist z.B. in der Europäischen Patentanmeldung 0 191 170 beschrieben.

Ein Problem bei solchen Tankentlüftungssystemen besteht darin, daß die aus der Atmosphäre angesaugte Spülluftmasse und der in ihr enthaltene Kraftstoffanteil nicht bekannt sind. Dieses dem Motor zusätzlich zugeführte Kraftstoffluftgemisch verfälscht das von der Motorsteuerung optimal eingestellte Kraftstoffluftgemisch. Diese Verfälschung wird von der Lambda-Sonde detektiert und entsprechend durch die Lambda-Regelung ausgeglichen. Bis zu diesem Ausgleich durch die Lambda-Regelung liegt jedoch bei jedem Spülvorgang ein verschlechtertes Abgasverhalten vor.

Die Aufgabe der Erfindung besteht nun darin, ein Tankentlüftungssystem so weiterzubilden, daß das durch den Spülvorgang zusätzlich vorhandene Kraftstoffluftgemisch abgeschätzt werden kann, ohne daß zusätzliche Meßeinrichtungen gebraucht werden.

Gemäß einer weiteren Aufgabe der Erfindung soll außerdem eine einfache Diagnosemöglichkeit für das Funktionieren des Tankentlüfungssystems geschaffen werden.

Die erfindungsgemäße Lösung ist im Anspruch 1 und im Anspruch 5 gekennzeichnet. Vorteilhafte Weiterbildungen der Erfindung finden sich in den Unteransprüchen.

Gemäß der Erfindung wird die Spülluftmasse zur Spülung des Aktivkohlefilters nicht mehr der Atmosphäre direkt entnommen, sondern über eine Zufuhrleitung aus dem Ansaugtrakt zwischen der Drosselklappe und dem Luftmassenmesser. Daher ist die Spülluftmasse direkt über den bereits vorhandenen Luftmassenmesser bestimmbar. Öffnet man nämlich das Tankentlüftungsventil, so daß eine Spülluftmasse den Aktivkohlefilter durchströmt, so muß diese Spülluftmasse vorher den Luftmassenmesser passieren. Es tritt also eine Änderung des gemessenen Luftmassenwerts auf, die bei stationären Motorbetriebsbedingungen direkt der Spülluftmasse entspricht.

In Kenntnis der exakten Spülluftmasse und der sich aus dem Spülvorgang ergebenden Lambda-Abweichung kann dann die exakt zugegebene Kraftstoffmasse und damit die Beladung des Aktivkohlefilters ermittelt werden.

Durch die Lambda-Abweichung ergibt sich zwar kurzzeitig eine schlechtere Abgaszusammensetzung, jedoch muß dieser Vorgang nur einmal durchgeführt werden. Ist nämlich die Beladung des Aktivkohlefilters einmal bekannt, so kann der weitere Verlauf der Beladung abhängig von Umgebungslufttemperatur, der Dauer der einzelnen Spülvorgänge und der jeweils dabei gesteuerten Öffnung des Tankentlüfungsventils abgeschätzt werden. Da ein Sensor zur Erfassung der Umgebungslufttemperatur in Fahrzeugen mit Motorsteuerungen üblicherweise vorhanden ist, wird kein zusätzlicher Sensor benötigt.

Für alle weiteren Spülvorgänge ist daher das Spülgemisch aus der Beladung des Aktivkohlefilters und der über den Luftmassenmesser gemessenen Spülluftmasse bekannt. Die Verfälschungen durch das dem Motor zugeführte Spülgemisch können daher kompensiert werden, so daß bei den einzelnen Spülvorgängen keine Lambda-Regelabweichung mehr auftritt.

Die erfindungsgemäße Lösung bietet auch eine einfache Möglichkeit für die in manchen Ländern vorgeschriebene Funktionsüberwachung des Tankentlüftungssystems. Bei jeder Ansteuerung - also jedem Öffnen oder Schließen - des Tankentlüftungsventils muß die vom Luftmassenmesser gemessene Luftmasse sich entsprechend ändern. Bleibt das Tankentlüftungsventil dagegen bei Ansteuerung in irgendeiner Position hängen, ist dies dadurch erkennbar, daß keine Änderung der Luftmasse auftritt.

Eine vorteilhafte Weiterbildung der Erfindung besteht darin, in der Zufuhrleitung für die Spülluftmasse ein Rückschlagventil vorzusehen. Dieses Rückschlagventil sitzt direkt an der Entnahmestelle am Ansaugtrakt. Es läßt eine Massenströmung nur in Richtung auf den Aktivkohlefilter zu.

Durch dieses Rückschlagventil ist sichergestellt, daß bei einer Leckage oder einem Bruch der Zufuhrleitung keine Falschluft in den Ansaugtrakt gelangt.

Um die bei der Beladung des Aktivkohlefilters mit Kraftstoffdämpfen aus dem Tank erforderliche Strömung zu gewährleisten ist das Rückschlagventil mit einer entsprechend dimensionierten Bypaßleitung überbrückt. Derselbe Effekt kann erreicht werden, wenn statt der Bypaßleitung ein Rückschlagventil mit einer definierten

Leckluftmenge verwendet wird.

Ein weiterer Vorteil der erfindungsgemäßen Lösung ist, daß auch bei einem Totalausfall des Tankentlüftungssystems keine Kraftstoffdämpfe in die Atmosphäre gelangen. Bei einem konventionellen System mit einseitig offenem Aktivkohlefilter tritt bei Überschreiten der Beladungskapazität des Aktivkohlefilters Kraftstoff ins Freie aus.

Bei dem erfindungemäßen System dagegen wird dieser Kraftstoff in der Zufuhrleitung zurückgehalten. Eine Überlastung der Zufuhrleitung durch sich aufbauenden Druck ist durch die Bypaßleitung bzw. das Rückschlagventil mit definierter Leckluftmenge verhindert. Im Extremfall kann also höchstens Kraftstoff in den Ansaugtrakt geraten.

Die Erfindung wird anhand der Figuren näher erläutert. Dabei Zeigen:

Figur 1 eine schematische Darstellung eines Tankentlüftungssystems gemäß der Erfindung,

Figur 2 ein Flußdiagramm zur Erläuterung des Verfahrens bei einem ersten Spülvorgang,

Figur 3 ein Flußdiagramm zur Erläuterung des Verfahrens bei weiteren Spülvorgängen und

Figur 4 ein Flußdiagramm zur Erläuterung des Verfahrens für die Diagnose der Funktion des Tankentlüftungsventils.

In Figur 1 ist schematisch der Ansaugtrakt 1 einer Brennkraftmaschine dargestellt. Die einströmende Luft passiert dabei einen Luftmassenmesser 12 und eine Drosselklappe 11, bevor sie in den Motor 2 gelangt. An den Motor 2 schließt sich ein Auspufftrakt 3 an, in dem eine Lambda-Sonde 31 zur Messung des Abgases installiert ist.

Der Luftmassenmesser 12 und die Lambda-Sonde 31 sind an eine nicht dargestellte Motorsteuerung angeschlossen. Die Motorsteuerung steuert ein Zündungs- und Einspritzsystem für die Brennkraftmaschine.

Ein Tank 4 ist über eine Verbindungsleitung 46 mit einem Speicher in Form eines Aktivkohlefilters 41 verbunden. Dadurch werden im Tank 4 anfallende Kraftstoffdämpfe in dem Aktivkohlefilter 41 gespeichert.

Zum Spülen des Aktivkohlefilters 41 ist dieser über eine Spülleitung 44 und ein Tankentlüftungsventil 42 mit dem Ansaugtrakt 1 stromabwärts der Drosselklappe 11 verbunden. Eine Zufuhrleitung 45 verbindet den Aktivkohlefilter 41 mit dem Ansaugtrakt 1 zwischen der Drosselklappe 11 und dem Luftmassenmesser 12. An der Anschlußstelle dieser Zufuhrleitung 45 am Ansaugtrakt 1 ist ein Rückschlagventil 43 vorgesehen, das von einer kleinen Bypaßleitung 47 überbrückt ist. Das Tankentlüftungsventil 42 ist elektrisch betätigbar und wird von einem Steuergerät 5 angesteuert.

Die Funktionsweise soll anhand des Flußdiagramms der Figur 2 erläutert werden. Nach dem Start der Brennkraftmaschine ist die Beladung des Aktivkohlefilters 41 - also die Menge der in ihm gespeicherten Kraftstoffdämpfe - unbekannt. Diese Beladung wird daher beim ersten Spülvorgang ermittelt.

Den Zeitpunkt für diesen erstmals möglichen Spülvorgang legt die Motorsteuerung fest, wenn erstmalig ein unkritischer Betriebszustand der Brennkraftmaschine erreicht ist, bei dem das zusätzlich eingebrachte Spülgemisch keine allzu großen Betriebsstörungen verursacht.

Beim Schritt S1 wird dann das Tankentlüftungsventil 42 von dem Steuergerät 5 auf einen bestimmten Öffnungsquerschnitt aufgesteuert. Durch das Druckgefälle vor und hinter der Drosselklappe 11 entsteht dadurch eine Strömung über die Zufuhrleitung 45, den Aktivkohlefilter 41 und die Spülleitung 44 mit dem Tankentlüftungsventil 42. Dieses Leitungssystem wirkt als Bypaßleitung zum Ansaugtrakt 1, so daß damit der effektive Drosselquerschnitt erhöht wird und sich die angesaugte Luftmasse über den Luftmassenmesser 12 erhöht. Im stationären Betriebszustand der Brennkraftmaschine ist daher die am Luftmassenmesser 12 gemessene Erhöhung der Luftmassenstroms gleich dem Spülluftmassenstrom $\dot{Q}$, der den Aktivkohlefilter 41 durchströmt.

Je nach Beladung des Aktivkohlefilters 41 mit Kraftstoffdämpfen wird diese Spülluftmasse mehr oder minder mit Kraftstoff zu einem Spülgemisch angereichert. Dieses Spülgemisch gelangt über die Spülleitung 44 zusätzlich zu dem über die Motorsteuerung eingestellten Betriebsgemisch in den Motor 2.

Je nach Zusammensetzung dieses Spülgemisches ergeben sich dabei unterschiedliche Auswirkungen. Ist der Aktivkohlefilter 41 leer oder nur gering beladen, so besteht das Spülgemisch aus reiner Luft bzw. aus einem unterstöchiometrischen Gemisch und es wird sich eine Lambda-Regelabweichung in Richtung Mager ergeben. Ergibt die im Aktivkohlefilter 41 gespeicherte Beladung gerade ein stöchiometrisches Spülgemisch, so wird keine Lambda-Regelabweichung auftreten. Ist der Aktivkohlefilter 41 andererseits sehr stark mit Kraftstoffdämpfen beladen, so ergibt sich ein überstöchiometrisches Spülgemisch und es resultiert eine Lambda-Regelabweichung in Richtung Fett.

Im Schritt S2 nach Figur 2 wird diese Lambda-Regelabweichung $d\lambda$ und der Spülluftmassenstrom $\dot{Q}$ erfaßt. Dann wird beim Schritt S3 der aus dem Aktivkohlefilter 41 ausgespülte Spülkraftstoffmassenstrom $\dot{K}$ berechnet. Dieser Spülkraftstoffmassenstrom $\dot{K}$ ist ein Maß für die Beladung des Aktivkohlefilters 41. Er gibt an wieviel Kraftstoff bei dem eingestellten Öffnungsquerschnitt des Tankentlüftungsventils 42 und dem bestimmten Spülluftmassenstrom $\dot{Q}$ aus dem Aktivkohlefilter 41 ausgespült wird. Beim Schritt S4 wird schließlich das Tankentlüftungsventil 42 wieder geschlossen und damit der erste Spülvorgang beendet.

Bei allen folgenden Spülvorgängen findet nun ein anderes Verfahren Anwendung. Die Beladung des Aktivkohlefilters 41 mit Kraftstoffdämpfen wurde beim ersten Spülvorgang ermittelt. Da sich diese Beladung nicht schlagartig ändert, sondern nur langsam im wesentlichen als Funktion der seit dem letzten Spülvorgang vergangenen Zeit und der Umgebungstemperatur, kann die Beladung zu Beginn jedes weiteren Spülvorganges abgeschätzt werden.

Dabei wird gemäß dem in Figur 3 gezeigten Flußdiagramm beim Schritt S10 die Zeit seit dem letzten Spülvorgang $\Delta$ t und die Umgebungstemperatur $T_U$ eingelesen. Ein Sensor für die Umgebungstemperatur ist im System der Motorsteuerung vorhanden.

Beim Schritt S20 wird der beim folgenden Spülvorgang zu erwartende Spülkraftstoffmassenstrom $\dot{K}_{Neu}$ aus folgender Beziehung berechnet:

$$\dot{K}_{Neu} = \dot{K}_{Alt} + \left[ \frac{dK}{dt} \cdot \exp \left\{ b \left[ \frac{T_U - T_B}{T_B} \right] \right\} \Delta t \right]$$

wobei

$\dot{K}_{Neu}$ : beim aktuellen Spülvorgang sich ergebender Spülkraftstoffmassenstrom

$\dot{K}_{Alt}$ : beim vorhergehenden Spülvorgang ermittelter Spülkraftstoffmassenstrom $\dot{K}$

$\frac{dK}{Tank^{dt}}$ : Beladungsfaktor bei Bezugstemperatur (abhängig von geometrie etc.), durch Versuche ermittelt

$$\exp \left\{ b \left[ \frac{T_U - T_B}{T_B} \right] \right\} : \text{temperaturabhängiger Korrekturfaktor}$$

b : Konstante (durch Versuche ermittelt)

$T_U$ : Umgebungstemperatur in K

$T_B$ : Bezugstemperatur in K

$\Delta_t$ : Zeit seit dem letzten Spülvorgang

Der so berechnete Wert des Spülkraftstoffmassenstroms $\dot{K}$ wird dann an die Motorsteuerung übergeben. Diese kann damit bei der Ermittlung der einzuspritzenden Kraftstoffmasse die durch den Spülvorgang hinzukommende Spülkraftstoffmassse berücksichtigen, so daß weiterhin ein stöchiometrisches Gemischverhältnis in den Motor 2 gelangt. Die Motorsteuerung führt diese Korrektur während des gesamten Spülvorgangs durch, also solange das Steuergerät 5 das Tankentlüftungsventil öffnet.

Bei den einzelnen Spülvorgängen tritt also keine Lambda-Regelabweichung mehr auf und damit auch keine Verschlechterung der Abgaswerte.

Bei der beschriebenen Ausführungsform wird weiter die Funktion des Tankentlüftungssystem gemäß dem in Figur 4 beschriebenen Flußdiagramm überwacht. Der Programmlauf startet bei jeder Ansteuerung des Tankentlüftungsventils 42. Beim Öffnen und beim Schließen muß sich dabei immer - bei intaktem Tankentlüftungssystem - die Spülluftmasse ändern. Diese Änderung wird über den Luftmassenmesser 12 beim Schritt S100 detektiert. Tritt keine Änderung auf, so ist z.B. das Tankentlüftungsventil 42 trotz Ansteuerung hängengeblieben und es wird beim Schritt S200 eine Fehlermeldung erzeugt.

## Patentansprüche

1. Tankentlüftungssystem für eine Brennkraftmaschine, die eine Lambda-Regeleinrichtung und einen Ansaugtrakt (1) aufweist, in dem eine Drosselklappe (11) sowie ein Luftmassenmesser (12) zur Bestimmung der von der Brennkraftmaschine angesaugten Luftmasse vorgesehen ist,
   - mit einem mit dem Tank (4) verbundenen Speicher (41) zur Aufnahme von Kraftstoffdämpfen,
   - mit einer Spülleitung (44) über die der Speicher (41) mit dem Ansaugtrakt (1) stromabwärts der Drosselklappe (11) verbunden ist und mittels einer Spülluftmasse gespült wird,
   - mit einem Tankentlüftungsventil (42) in der Spülleitung (44) zur Steuerung der Spülluftmasse,

- mit einem Steuergerät (5), das das Tankentlüfungsventil (42) bei bestimmten Betriebszuständen der Brennkraftmaschine während eines Spülvorgangs ansteuert,

**dadurch gekennzeichnet,**

daß der Speicher (41) über eine Zufuhrleitung (45) mit dem Ansaugtrakt (1) zwischen der Drosselklappe (11) und dem Luftmassenmesser (12) verbunden ist und darüber die Spülluftmasse erhält.

**2.** Tankentlüftungssystem nach Anspruch 1,
**dadurch gekennzeichnet,**
daß ein Rückschlagventil (43) in der Zufuhrleitung (45) an der Entnahmestelle am Ansaugtrakt (1) vorgesehen ist, das eine Massenströmung nur in einer Richtung auf den Speicher (41) zu fließen läßt.

**3.** Tankentflüfungssystem nach Anspruch 2,
**dadurch gekennzeichnet,**
daß eine Bypaßleitung (47) das Rückschlagventil (43) überbrückt, um eine zur Beladung des Speichers (41) nötige Strömung zu gewährleisten.

**4.** Tankentlüftungssystem nach Anspruch 2,
**dadurch gekennzeichnet,**
daß das Rückschlagventil (43) eine definierte Leckluftmenge im geschlossenen Zustand zuläßt, um eine zur Beladung des Speichers (41) nötige Strömung zu gewährleisten.

**5.** Verfahren zum Betrieb eines Tankentlüftungssystems nach einem der Ansprüche 1 - 4,
**dadurch gekennzeichnet,**
daß nach dem Start der Brennkraftmaschine das Steuergerät (5) das Tankentlüftungsventil (42) während eines ersten Spülvorgangs öffnet und daß sich im stationären Betriebszustand aus der sich ergebenden Lambda-Regelabweichung ($d\lambda$) und dem über den Luftmassenmesser (12) gemessenen Spülluftmassenstrom ($\dot{Q}$) ein Spülkraftstoffmassenstrom ($\dot{K}$) als Maß für die Beladung des Speichers nach der Beziehung $\dot{K} = \frac{\dot{Q}}{d\lambda}$ berechnet wird.

**6.** Verfahren nach Anspruch 5,
**dadurch gekennzeichnet,** daß bei
weiteren Spülvorgängen der zu erwartende Spülkraftstoffmassenstrom ($\dot{K}$) aus der Zeit seit dem letzten Spülvorgang ($\Delta t$) und der gemessenen Umgebungstemperatur ($T_U$) ausgehend von dem beim vorhergehenden Spülvorgang ermittelten Spülkraftstoffmassenstrom ($\dot{K}$) berechnet wird.

**7.** Verfahren nach Anspruch 5 oder 6
**dadurch gekennzeichnet,**
daß bei jeder Ansteuerung des Tankentlüftungsventils (42) geprüft wird, ob die vom Luftmassenmesser (12) gemessene Luftmasse sich entsprechend ändert und daß ein Fehlersignal erzeugt wird, wenn sich die gemessene Luftmasse dabei nicht ändert.

## Claims

**1.** Tank ventilation system for an internal combustion engine which has a lambda control device and an intake section (1) in which a throttle valve (11) and an air flow rate meter (12) for determining the flow rate of air taken in by the internal combustion engine is provided,

- having an accumulator (41) connected to the tank (4) for holding fuel vapours,
- having a scavaging line (44) via which the accumulator (41) is connected to the intake section (1) downstream of the throttle valve and is scavenged by means of a scavenging air mass,
- having a tank ventilation valve (42) in the scavenging line (44) for controlling the scavenging air mass,
- having a control device (5) which in certain operating stages of the internal combustion engine actuates the tank ventilation valve (42) during a scavenging operation,

characterised in that the accumulator (41) is connected to the intake section (1) between the throttle valve (11) and the air flow rate meter (12) via a feed line (45) and receiving the scavenging air mass via said line.

**2.** Tank ventilation system according to Claim 1, characterised in that in the feed line (45) at a withdrawal

point on the intake section (1) a non-return valve (43) is provided which allows a flow only in the direction of the accumulator (41).

3. Tank ventilation system according to Claim 2, characterised in that a bypass line (47) bypasses the non-return valve (43) in order to ensure a flow necessary to charge the accumulator (41).

4. Tank ventilation system according to Claim 2, characterised in that the non-return valve (43) permits a defined flow rate of leakage air in the closed state in order to ensure a flow which is necessary for charging the accumulator (41).

5. Method for operating a tank ventilation system according to one of Claims 1-4, characterised in that after the start of the internal combustion engine the control unit (5) opens the tank ventilation valve (42) during a first scavenging operation and in that in a steady-state operating state a scavenging fuel flow rate ($\dot{K}$) is calculated from the lambda control deviation ($d\lambda$) which is obtained and the scavenging air flow rate ($\dot{Q}$) which is measured via the air flow rate meter (12) as a measure of the charging of the accumulator according to the equation $\dot{K} = \frac{\dot{Q}}{d\lambda}$.

6. Method according to Claim 5, characterised in that in the case of further scavenging operations the scavenging fuel flow rate ($\dot{K}$) to be expected is calculated from the time since the last scavenging operation ($\Delta t$) and the measured ambient temperature ($T_U$) on the basis of the scavenging fuel flow rates obtained in the preceding scavenging operation.

7. Method according to Claim 5 or 6 characterised in that whenever the tank ventilation valve (42) is actuated it is tested whether the air flow rate measured by the air flow rate meter (12) changes appropriately, and in that an error signal is generated if the measured air flow rate does not change in this process.

## Revendications

1. Système de dégazage de'réservoir pour un moteur à combustion interne, qui possède un dispositif de régulation lambda et une tubulure d'aspiration (1), dans lequel sont disposés un papillon d'étranglement (11) ainsi qu'un débitmètre d'air (12) servant à déterminer la masse d'air aspirée par le moteur à combustion interne, comportant
   - un récipient d'accumulation (41), qui est raccordé au réservoir (4) et sert à recevoir des vapeurs de carburant,
   - une canalisation de balayage (44), au moyen de laquelle le récipient d'accumulation (41) est raccordé à la tubulure d'aspiration (1) en aval du papillon d'étranglement (11) et est balayé au moyen d'une masse d'air de balayage,
   - une soupape (42) de dégazage du réservoir, qui est montée dans la canalisation de balayage (44) pour commander la masse d'air de balayage,
   - un appareil de commande (5), qui commande la soupape (42) de désaération du réservoir, dans le cas d'états déterminés de fonctionnement du moteur à combustion interne pendant une opération de balayage,

   caractérisé par le fait
   - que le récipient d'accumulation (41) est raccordé par l'intermédiaire d'une canalisation d'amenée (45) à la tubulure d'aspiration (1) entre le papillon d'étranglement (11) et le débitmètre massique d'air (12) et reçoit, par l'intermédiaire de cette canalisation, la masse d'air de balayage.

2. Système de dégazase de réservoir suivant la revendication 1, caractérisé par le fait qu'il est prévu dans la canalisation d'aménée (45), au niveau du point de prélèvement dans la tubulure d'aspiration (1), une soupape antiretour (43) qui laisse passer un courant massique uniquement dans un sens en direction du dispositif d'accumulation (41).

3. Système de dégazage de réservoir suivant la revendication 2, caractérisé par le fait que la soupape antiretour (43) est contournée par une canalisation de dérivation (47) servant à garantir un écoulement nécessaire pour charger le récipient d'accumulation (41).

4. Système de dégazage de réservoir suivant la revendication 2, caractérisé par le fait que la soupape antiretour (43) autorise une quantité de fuite d'air définie à l'état fermé, afin que soit garanti un écoulement nécessaire pour le chargement du récipient d'accumulation (41).

**5.** Procédé pour faire fonctionner un système de dégazage de réservoir suivant l'une des revendications 1-4, caractérisé par le fait
qu'après le démarrage du moteur à combustion interne, l'appareil de commande (5) ouvre la soupape (42) de dégazage du réservoir, pendant une première opération de balayage, et qu'à l'état de fonctionnement stationnaire, un courant massique de carburant de balayage ($\dot{K}$) est calculé, à partir de l'écart de régulation de lambda obtenu ($d\lambda$) et du courant massique (Q) de l'air de balayage mesuré par l'intermédiaire du débitmètre massique d'air (12), en tant que degré de charge du récipient d'accumulation conformément à la relation $\dot{K} = \frac{\dot{Q}}{d\lambda}$.

**6.** Procédé suivant la revendication 5, caractérisé par le fait que dans le cas d'autres opérations de balayage, le courant massique (K) du carburant de balayage, auquel on peut s'attendre, est calculé à partir de la durée qui s'est écoulée depuis la dernière opération de balayage ($\Delta t$) et de la température ambiante mesurée ($T_U$) à partir du courant massique ($\dot{K}$) du carburant de balayage déterminé lors de l'opération précédente de balayage.

**7.** Procédé suivant la revendication 5 ou 6,
caractérisé par le fait
que lors de chaque commande de la soupape (42) de dégazage du réservoir, une vérification est faite pour savoir si la masse d'air mesurée par le débitmètre massique d'air (12) varie de façon correspondante, et qu'un signal d'erreur est produit lorsque la masse d'air mesurée ne varie pas.

FIG 1

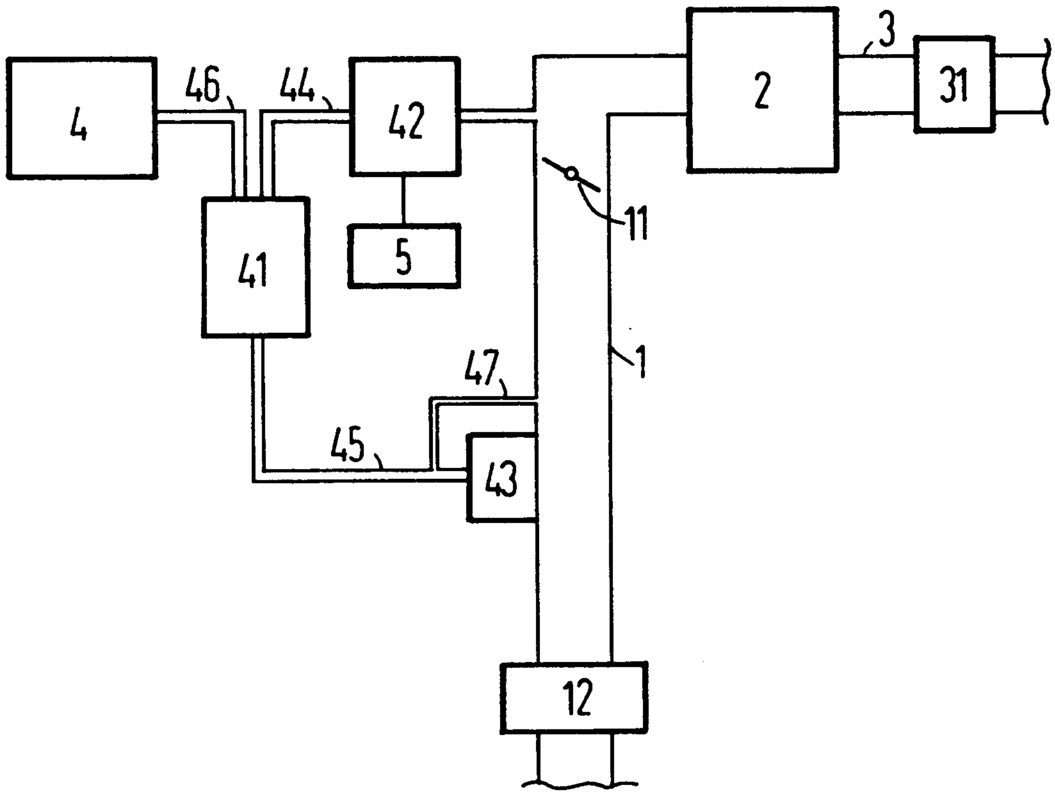
4
46
44
42
41
5
2
3
31
11
1
47
45
43
12

FIG 4

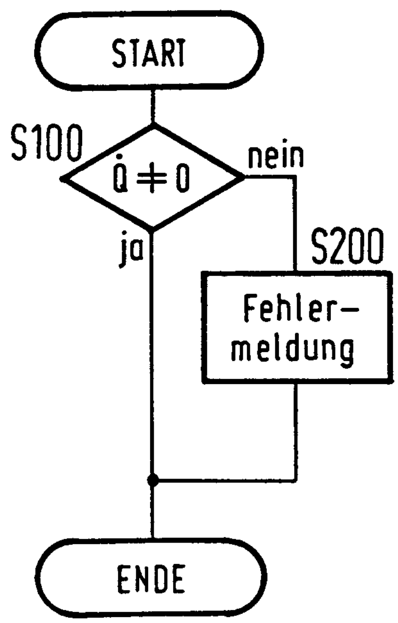
START
S100
Q̇ ≠ 0
nein
ja
S200
Fehler-
meldung
ENDE

FIG 2

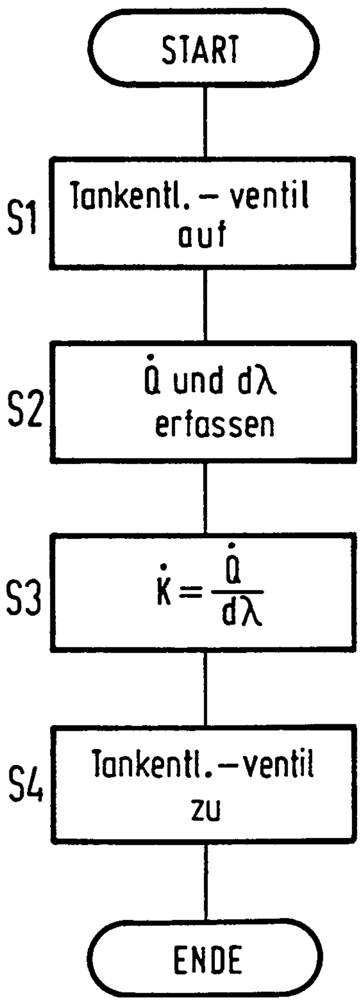
START
S1
Tankentl. – ventil
auf
S2
Q̇ und dλ
erfassen
S3
K̇ = Q̇/dλ
S4
Tankentl. – ventil
zu
ENDE

FIG 3

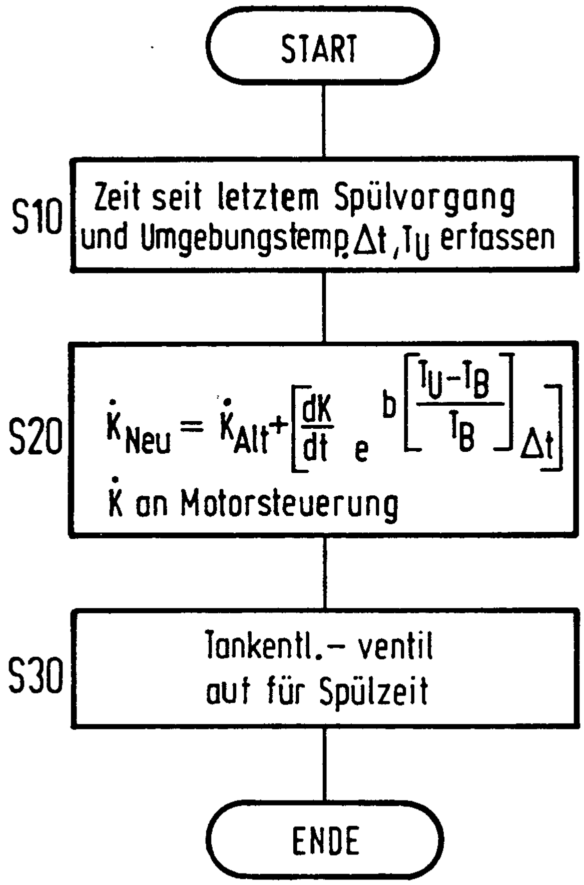
START
S10
Zeit seit letztem Spülvorgang
und Umgebungstemp. Δt, $T_U$ erfassen
S20
$\dot{K}_{Neu} = \dot{K}_{Alt} + \left[\frac{dK}{dt} e^{b\left[\frac{T_U - T_B}{T_B}\right]} \Delta t\right]$
K̇ an Motorsteuerung
S30
Tankentl. – ventil
auf für Spülzeit
ENDE